(19) Europäisches Patentamt
European Patent Office
Office européen des brevets

(11) Publication number: 0 209 149 B1

(12) **EUROPEAN PATENT SPECIFICATION**

(45) Date of publication of the patent specification: 16.05.90

(51) Int. Cl.[5]: C21B 13/14

(21) Application number: 86109880.4

(22) Date of filing: 18.07.86

(54) **Method for melt-reducing iron ore.**

(30) Priority: 19.07.85 JP 160974/85

(43) Date of publication of application: 21.01.87 Bulletin 87/4

(45) Publication of the grant of the patent: 16.05.90 Bulletin 90/20

(84) Designated Contracting States: DE FR

(56) References cited:
EP-A- 196 359
EP-A- 209 861
EP-A- 0 018 184
EP-A- 0 054 926
EP-A- 0 063 924
EP-A- 0 126 391

PATENT ABSTRACTS OF JAPAN, vol. 3, no. 114 (C-59), 21st September 1979, page 79 C 59; & JP - A - 54 93617 (KOBE SEIKOSHO) 24-07-1979

(73) Proprietor: KABUSHIKI KAISHA KOBE SEIKO SHO, 3-18 Wakinohama-cho 1-chome Chuo-ku, Kobe 651(JP)

(72) Inventor: Seki, Yoshikazu, 3-13-10-317, Danjyo-cho, Nishinomiya(JP)
Inventor: Watanabe, Ryo, 500-21, Arima-cho, Kita-ku Kobe(JP)
Inventor: Nishida, Reijiro, 4-10-23, Kitagoyo, Kita-ku Kobe(JP)
Inventor: Imanishi, Nobuyuki, 1-18-5, Izumidai, Kita-ku Kobe(JP)

(74) Representative: Thomsen, Dieter, Dr.rer.nat., Kaiser-Ludwig-Platz 6, D-8000 München 2(DE)

EP 0 209 149 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improvement in the method for melt-reducing iron ore. More particularly it is concerned with a method for preventing clustering in a preliminary reducing shaft furnace and attaining an improvement of the reduction efficiency in this preliminary reducing shaft furnace.

In the technique for manufacturing pig iron without using a blast furnace there have been developed different methods, such as the KR method, the COIN method, the Kawa-Tetsu method and the Sumi-Kin method as small-scale iron manufacturing techniques. These methods require both a preliminary reducing furnace and a melt-reducing furnace.

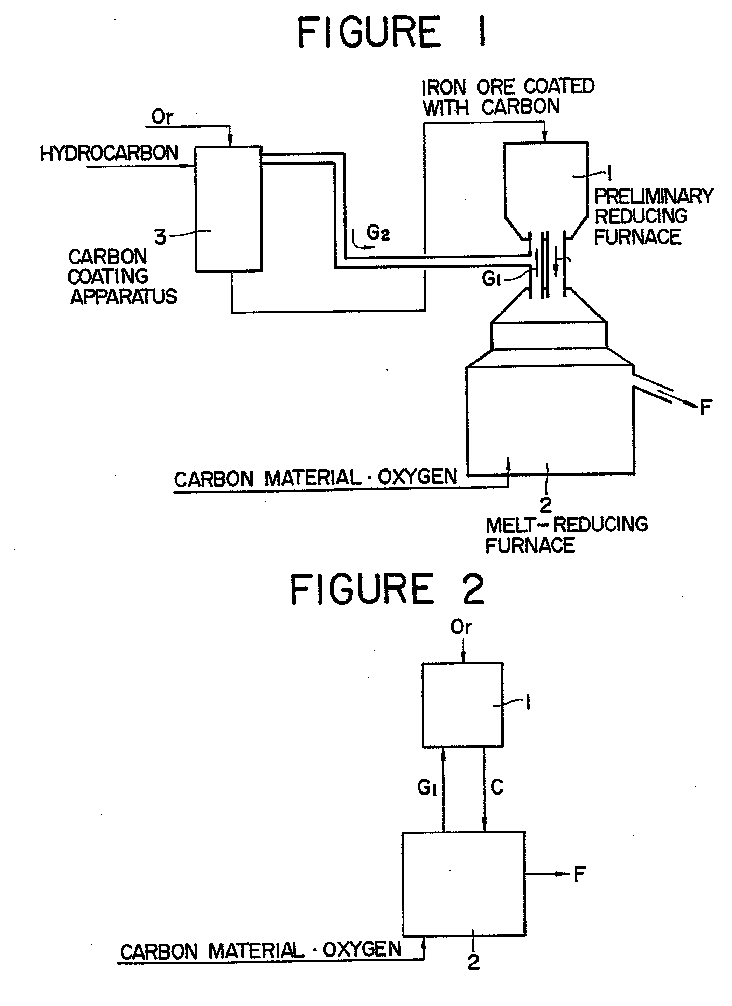

The principle of an arrangement for melt-reducing iron ore is shown in Fig. 2, in which the high-temperature gas $G_1$, produced in a melt-reducing furnace 2 and containing CO as a main component (also containing $CO_2$, $H_2$ and $H_2O$), is fed as a heat source and as a reducing agent to a preliminary reducing furnace 1. Pig iron is placed beforehand in the melt-reducing furnace 2 and held therein in a molten state, whereupon carbon material and oxygen gas (or air) are introduced therein to provide the heat source and the reducing gas. The iron or C which has been reduced partially in the preliminary reducing furnace 1 is charged into the melt-reducing furnace so that the reduction can be terminated completely therein. Then the product obtained in this way is taken out of the melt-reducing furnace 2 in the form of pig iron F.

In case of the described method carbon material and oxygen gas are introduced into molten iron and being heated at temperatures in excess of 1,500°C. If this oxygen gas is introduced directly into the preliminary reducing furnace 1 there will occur fusing; it is a clustering phenomenon of iron ore pieces with each other; this has the consequence that the discharge from the preliminary reducing furnace 1 becomes rather difficult.

In an effort to remedy this drawback it has been proposed already by the Applicant (see JP-Patent Application 191 330/84, published 10. April 1986 and corresponding to EP-A 196 359) to feed hydrocarbons from a source, such as petroleum or coal, into the preliminary reducing furnace 1 so that iron ore is coated with carbon and the clustering phenomenon of the iron or can be avoided.

Within the melt-reducing furnace 2 the post-combustion is allowed to take place just after the production of CO and $H_2$ within the high-temperature gas $G_1$ so that the combustion is allowed to proceed on the surface of pig iron bath while at the same time a recovery of heat can be effected. As a result of the above combustion the concentration of $CO_2$ and $H_2O$ is increased while at the same time the concentration of CO and $H_2$ is decreased by the following reactions:

$$2CO + O_2 \rightarrow 2CO_2 \quad ...(1)$$
$$2H_2 + O_2 \rightarrow 2H_2O \quad ...(2)$$

Consequently the reducibility of the gas $G_1$ is deteriorated so that the feed into the preliminary reducing furnace 1 has to be increased. Since the above combustion is an exothermic reaction the temperature of the gas $G_1$ is further raised which increases the danger that a clustering phenomenon can take place. Thus from the standpoint of prevention of clustering the operating temperature in the preliminary reducing furnace 1 has to be limited. Thereby in case of a fluidized bed furnace a temperature of about 780°C has to be considered to be an upper limit. A reduction of the temperature of the gas $G_1$ fed to the preliminary reducing furnace 1 leads, however, to a reduction of the efficiency of the preliminary reduction process.

From EP-A 54 926 there is known a process for the production of reduced iron with simultaneous thermal cracking of heavy oils thereby producing lighter oils. Thus the cracking of heavy oils is performed by a fluidized-bed catalytic cracking (FFC) process.

From the Patent Abstracts of Japan, Vol. 3 No. 114 (C-59) of September 21, 1979, page 79 C 59 there is further known a method for iron making within a reduction furnace whereby the iron containing material is dropped onto an endless band driver and whereby the occurance of clustering within the reduction furnace is prevented by MgO, CaO or carbon powder thereby forming a thin film on the surface of the raw granules.

In view of this prior art it is the object of the present invention to provide a method and an arrangement for melt-reducing iron ore in which by using a preliminary reducing shaft furnace the clustering phenomenon can be avoided completely while at the same time the efficiency of the reduction process can be improved without requiring an upper limit of the operating temperature.

According to the invention this object can be attained by providing the features as stated within claims 1 and 2.

Brief Description of the Drawings

Fig. 1 is a conceptual diagram showing an example of equipment for practising the method of the present invention, and Fig. 2 is a conceptual diagram of a conventional equipment.

1 ... preliminary reducing shaft furnace
2 ... melt-reducing furnace
3 ... carbon coating apparatus

According to the present invention there is provided a method capable of not only preventing the clustering phenomenon in the preliminary reducing shaft furnace but also effectively utilizing the gas evolved by the carbon coating and capable of attaining the cooling of the high-temperature gas $G_1$ and improvement of the reducibility.

The gist of the present invention resides in that a preliminary reduction of the iron ore is performed in a state where the surface of the iron ore is coated with carbon; and $H_2$ and hydrocarbon gases evolved in the coating treatment are fed to the preliminary reducing shaft furnace to accelerate the reduction rate.

According to the invention the carbon coating on the starting iron ore not only prevents the fusing of iron ore pieces with each other, but also reacts partially with $CO_2$ and $H_2O$ incorporated in the high-temperature gas $G_1$ in the following manner; thereby enhancing the reproducibility of the gas $G_1$:

$$C + CO_2 \rightarrow 2CO \quad .... (3)$$
$$C + H_2O \rightarrow CO + H_2 \quad .... (4)$$

On the other hand, in the step of coating the iron ore surface with carbon, there is adopted a means of heating petroleum or coal hydrocarbons and coating the iron ore surface therewith, so the evolution of cracked gas $G_2$ has been presumed. As a result of experiment on one example thereof, there were obtained such results as shown in Table 1. The gas temperature was about 400°C.

Table 1

| | | | |
|---|---|---|---|
| $H_2$ | 7.6% | $C_3H_8$ | 6.3% |
| $CH_4$ | 36.2% | $C_3H_6$ | 11.0% |
| $C_2H_6$ | 13.3% | $C_4H_6$ | 13.2% |
| $C_2H_4$ | 12.6% | – | – |

The following became clear: The composition and proportion as well as the total amount of gas evolved differ depending on the hydrocarbon material used for the coating, and particularly the total amount of gas evolved differs depending on the coating temperature. Generally, the proportion of the gas evolved was found to be about 10 to 40% by weight based on the amount of the hydrocarbon material used.

On the other hand, mention will now be made of the CO-predominating high-temperature gas $G_1$. As the carbon material to be introduced into the melt-reducing furnace there is generally employed coal or coke; and its amount to be introduced is almost determined by the amount of unreduced iron ore contained in the preliminary reduced iron C which is brought into the melt-reducing furnace; usually it is 350 to 750 kg per ton of molten iron. The carbon material is gasified in the melt-reducing furnace, whereby the CO-predominating high-temperature gas $G_1$ is evolved. The composition, proportion and total amount of the gas $G_1$ differ depending on the composition and amount of the carbon material and various other conditions; but a typical composition is as set out in Table 2.

Table 2

| CO | $CO_2$ | $H_2$ | $H_2O$ |
|---|---|---|---|
| 67.6% | 7.5% | 17.5% | 7.4% |

The evolved gas $G_1$ is discharged at a high temperature above 1,500°C, e.g. by incorporating the cracked gas $G_2$ (about 400°C) therein; a cooling is effected to a gas temperature suitable for the preliminary reduction and not causing clustering. Thus there is no heat loss as in the prior art in which heat is released to the exterior by taking the trouble to use a cooler. In the composition of the cracked gas $G_2$, the other components than $H_2$ shown in Table 1, as they are, will not exhibit any function as a reducing agent. But there is adopted a means for mixing the evolved gas $G_1$ and the cracked gas $G_2$ as mentioned above; decompositions will take place as represented by the following chemical reactions, whereby the formation of CO and $H_2$ having a strong reducing function is expected:

$$CH_4 + CO_2 \rightarrow 2CO + 2H_2 \quad .... (5)$$
$$CH_4 + H_2O \rightarrow CO + 3H_2 \quad .... (6)$$

The oxygen fed from the iron ore side also contributes to these decomposition reactions.

Moreover, it is generally known that the above decomposition reactions run efficiently in the presence of metal iron as catalyst. In this connection, metal iron comes to be present in the preliminary reducing furnace as the reduction proceeds partially, and so also in this point it is extremely effective to perform the above reactions in the preliminary reducing furnace. If there is adopted such means as illustrated in Fig. 1 in which a carbon coating apparatus 3 for iron ore is disposed before the preliminary reducing shaft furnace 1 and the cracked gas $G_2$ from the coating apparatus 3 is mixed with the evolved gas $G_1$,

followed by introducing into a lower portion of the preliminary reducing shaft furnace 1, then the above decomposition reactions (5) and (6) will be completed beforehand because the foregoing reduced iron is present at the bottom of the preliminary reducing shaft furnace 1, and consequently the gaseous mixture is fed to the furnace 1 after control of reducing agent component and temperature. This is more convenient.

Thus, by mixing the cracked gas $G_2$ with the evolved gas $G_1$, there is fed to the preliminary reducing shaft furnace a reducing gas having a high reducing component concentration and a temperature of a level not causing clustering (and suitable for the reducing reaction).

Consequently, a great contribution can be made to the improvement in efficiency of the preliminary reduction and the prevention of clustering. Further, the improvement in efficiency of the preliminary reduction means contributes to the reduction in load of the melt-reducing furnace 2 and thus it becomes possible to decrease the amount of carbon material, etc. to be supplied to the melt-reducing furnace 2. This is convenient also from the economic point of view. Besides, as shown in the decomposition reaction formulae (5) and (6), $CO_2$ and $H_2O$ in the evolved gas $G_1$ are converted to reducing components and thereby utilized effectively. Even in the event the reaction of the formula (5) does not proceed sufficiently and a portion of $CO_2$ remains unreacted and in this state enters the preliminary reducing furnace, the carbon as coating over the iron ore is converted to CO as shown below and contributes to the improvement of reducibility:

$$CO_2 + C \rightarrow 2CO \quad .... (7)$$

[Example]

Fig. 1 is a diagram showing a typical example of the present invention, in which the same functional portions as in Fig. 2 are indicated by the same reference numerals.

Iron ore [Or] and hydrocarbon are introduced into the carbon coating apparatus 3 and the iron ore coated with carbon is fed to the preliminary reducing shaft furnace 1. On the other hand, the cracked gas $G_2$ as a discharged gas from the coating apparatus 3 is joined with the evolved gas $G_1$ flowing toward the preliminary reducing shaft furnace 1, whereby the decomposition reactions are allowed to take place to enhance reducibility and lower the temperature to an extent not causing fusing before introducing into the preliminary reducing furnace 1.

The following are charge and production on the gas side in the above process:
Charge of iron ore: 1.43 ton
Charge of coal tar (carbon coating apparatus): 100 kg/t pig iron
Charge of carbon material (melt-reducing furnace): 640 kg/t pig iron
Feed of oxygen (– ditto –): 430 $Nm^3$/t pig iron
Production of pig iron: 1 ton
Gas $G_1$ (the composition of Table 2): 1,200 kg/t pig iron
Gas composition at the lower portion of the preliminary reducing shaft furnace: Table 3

**Table 3**

| CO | $H_2$ | $H_2O$ |
|---|---|---|
| 75.1% | 20.0% | 4.9% |

According to the present invention, since the iron ore surface is coated with carbon, the clustering based on melting of the iron ore surface in the preliminary reducing furnace is prevented, and since there is adopted means which effectively utilizes the cracked gas resulting from carbon deposition on the iron ore, it is possible to effectively lower the temperature of the evolved gas from the melt-reducing furnace and contribute to the improvement of reducibility. Consequently, the preliminary reduction efficiency in the preliminary reducing shaft furnace is improved. Further, as a result thereof, it became possible to decrease the amount of carbon material, etc. to be fed to the melt-reducing furnace and make a great contribution to the reduction of cost required in the iron making process.

## Claims

1.) Method for making iron by melt reducing of iron ore, comprising

1. subjecting the iron ore in a solid state to a preliminary reduction in a preliminary redeucing shaft furnace,
2. subjecting it to a melt reduction in a melt-reducing furnace,
3. coating prior to step 1 the surface of the iron ore with carbon in a coating apparatus and feeding this material to the preliminary reduction,
4. feeding $H_2$ gas and hydrocarbon gas, evolved during the coating treatment, to the preliminary reducing furnace for accelerating the reduction rate,
5. where within the 3. step the coating of the surface of iron ore with carbon is implemented via hydrocarbon material which is sprayed onto or mixed with the iron ore and then decomposed thermally and passing this material to the preliminary reduction,

6. where within the 4. step the $H_2$ gas and hydrocarbon gas, evolved during the coating, are mixed with a high-temperature gas, evolved from the melt-reducing furnace, and the resulting gaseous mixture is introduced into the preliminary reducing furnace from a lower part of the same furnace.

2.) Arrangement for making iron by melt reducing of iron ore for performing the method of claim 1, comprising

a) a separate coating apparatus (3) is provided for coating the surface of the iron ore with carbon,

b) a preliminary reduction shaft furnace (1) is provided into which the coated iron ore is fed,

c) a melt-reducing furnace (2) is provided, evolving high-temperature gases ($G_1$) to be mixed with $H_2$ and hydrocarbon gases ($G_2$), produced within the coating apparatus (3), for feeding into the preliminary reducing furnace (1) at its lower part to accelerate the reduction rate.

## Patentansprüche

1) Verfahren zur Herstellung von Eisen durch Schmelzreduktion von Eisenerz, umfassend:

1. das Eisenerz im festen Zustand wird einer Vorreduktion in einem Vorreduktions-Schachtofen unterworfen,

2. es wird einer Schmelzreduktion in einem Schmelzreduktionsofen unterworfen,

3. vor Stufe 1 wird die Oberfläche des Eisenerzes mit Kohlenstoff überzogen in einer Beschichtungseinrichtung, und dieses Material wird der Vorreduktion zugeführt,

4. $H_2$-Gas und Kohlenwasserstoff-Gas, entwickelt während der Überzugsbehandlung, werden dem Vorreduktions-Ofen zur Beschleunigung der Reduktionsrate zugeführt,

5. wobei innerhalb der 3. Stufe die Beschichtung der Oberfläche von Eisenerz mit Kohlenstoff ausgeführt wird mit Kohlenwasserstoffmaterial, das dem Eisenerz aufgesprüht oder zugemischt wird und danach thermisch zersetzt wird, während dann dieses Material zur Vorreduktion geleitet wird,

6. wobei innerhalb der 4. Stufe das $H_2$-Gas und Kohlenwasserstoff-Gas, entwickelt während der Überzugsbehandlung, mit einem Hochtemperatur-Gas, entwickelt aus dem Schmelzreduzierofen, gemischt werden und das resultierende Gasgemisch in den Vorreduktions-Ofen an einem unteren Teil desselben eingeführt wird.

2) Vorrichtung zur Herstellung von Eisen durch Schmelzreduzieren von Eisenerz zur Ausführung des Verfahrens nach Anspruch 1, umfassend:

a) eine gesonderte Beschichtungseinrichtung (3) ist vorgesehen zum Überziehen der Eisenerz-Oberfläche mit Kohlenstoff,

b) ein Vorreduktions-Schachtofen (1) ist vorgesehen, wohinein das beschichtete Eisenerz zugeführt wird,

c) ein Schmelzreduzierofen (2) ist vorgesehen, wo Hochtemperatur-Gase ($G_1$) entwickelt werden, die mit $H_2$ und Kohlenwasserstoff-Gasen ($G_2$), produziert innerhalb der Beschichtungseinrichtung (3), gemischt werden zur Zuführung in den Vorreduktions-Ofen (1) an dessen unterem Teil zur Beschleunigung der Reduktionsrate.

## Revendications

1. Procédé pour la production de fer, par réduction en bain de fusion de minerai de fer, consistant

1) à soumettre le minerai de fer, à l'état solide, à une réduction préliminaire dans un four à cuve réducteur préliminaire,

2) à le soumettre à une réduction en bain de fusion dans un four de réduction en bain de fusion,

3) à revêtier de carbone la surface du minerai de fer avant l'étape 1, dans un appareillage de revêtement, et à envoyer cette matière à la réduction préliminaire,

4) à envoyer de l'hydrogène gazeux et un hydrocarbure gazeux, qui se sont dégagés au cours du traitement de revêtement, au four préliminaire de réduction, pour accélérer la vitesse de réduction,

5) où, au cours de la 3ème étape, le revêtement, par du carbone, de la surface du minerai de fer est mis en œuvre par l'intermédiaire d'une matière hydrocarbonée, qui est pulvérisée sur le minerai de fer ou mélangée à ce dernier, puis subit une décomposition thermique, cette matière étant envoyée à la réduction préliminaire,

6) où, au cours de la 4ème étape, l'hydrogène gazeux et l'hydrocarbure gazeux qui se sont dégagés au cours du revêtement sont mélangés à un gaz à haute température, qui s'est dégagé du four réducteur en bain de fusion, et le mélange gazeux obtenu est introduit dans le four réducteur préliminaire à partir d'une partie inférieure de ce même four.

2. Dispositif permettant de fabriquer du fer par réduction en bain de fusion de minerai de fer, pour la mise en œuvre du procédé selon la revendication 1, comprenant

a) un appareillage de revêtement distinct 3, disposé pour revêtir de carbone la surface du minerai de fer,

b) un four à cuve réducteur préliminaire (1), dans lequel est introduit le minerai de fer revêtu,

c) un four réducteur en bain de fusion (2), duquel se dégagent des gaz à haute température ($G_1$), qui vont être mélangés à de l'hydrogène et à un hydrocarbure gazeux ($G_2$) produits à l'intérieur de l'appareillage de revêtement (3), pour introduction dans le four réducteur préliminaire (1) dans sa partie inférieure, pour accélérer la vitesse de réduction.

FIGURE 1

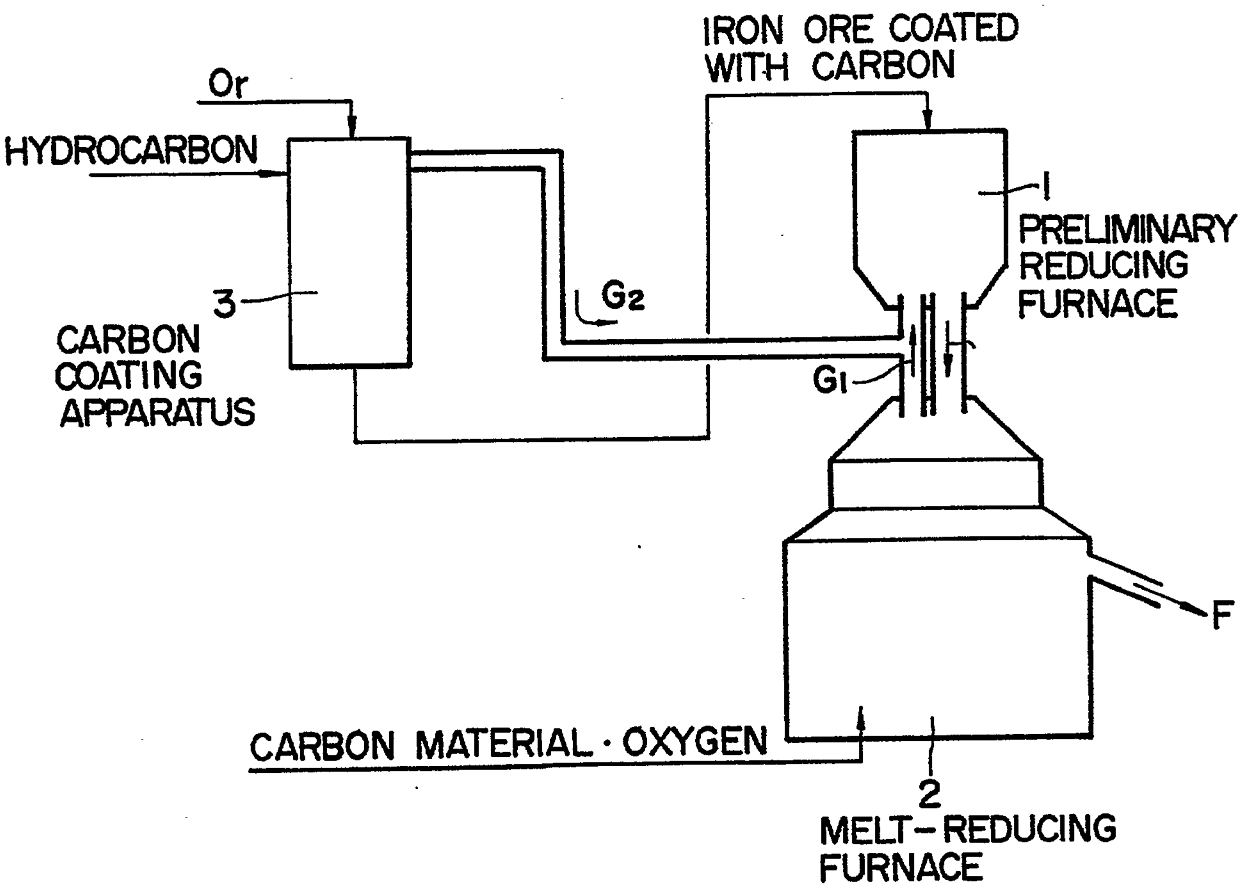


FIGURE 2